# EUROPEAN PATENT SPECIFICATION

(11) **EP 0 658 255 B1**
(45) Date of publication and mention of the grant of the patent: **01.08.2001**
(21) Application number: 93922076.0
(22) Date of filing: 02.09.1993
(51) Int. Cl.: G03G 9/08

(54) **METHOD FOR MANUFACTURING SPHERICAL PARTICLES**
VERFAHREN ZUR HERSTELLUNG VON KUGELFÖRMIGEN TEILCHEN
PROCEDE DE FABRICATION DE PARTICULES SPHERIQUES

(30) Priority: 03.09.1992 US 940364; 03.12.1992 US 985116
(43) Date of publication of application: 21.06.1995
(73) Proprietor: INDIGO N.V., 6229 GA Maastricht (NL)
(72) Inventor: LANDA, Benzion, Edmonton, Alberta T5K 1Y8 (CA); BEN-AVRAHAM, Peretz, 76 450 Rehovot (IL); BOSSIDON, Becky, 58 400 Holon (IL)
(74) Representative: de Bruijn, Leendert C.
(86) International application number: NL9300177
(87) International publication number: WO9406059

(56) References cited:
- EP-A- 0 334 095
- EP-A- 0 431 375
- FR-A- 2 262 335
- DATABASE WPI Derwent Publications Ltd., London, GB; AN 92-343949 & JP,A,4 247 464 (MITSUI TOATSU CHEM INC) 3 September 1992

## Description

### FIELD OF THE INVENTION

The present invention relates to the production of small particles, especially in the range of 1-10 micrometers in diameter. Such particles are especially useful for use in liquid or powder toners.

### BACKGROUND OF THE INVENTION

Toner materials, whether for liquid or powder toner development, should be tough, abrasion resistant, elastic and have proper electrical properties.

Many methods for the production of micron sized particles for use in liquid and powder toner compositions are known. These methods can be divided into a number of classes.

One type of process produces particles by dissolving a monomer or polymer or a plurality of monomers and/or polymers in a solvent, producing a polymerization reaction to form an insoluble polymer while stirring the solution/dispersion such that the polymer is precipitated as small particles. Example of this type of process are described in U.S. Patents 3,779,924, 4,996,265.

In a second type of process, a polymer or other material is dissolved in a solvent. The solution is combined with a solvent in which the polymer is insoluble and as a result the polymer precipitates out of the solution as small particles. The mixture is stirred during the process to aid in the formation of the particles. Examples of this type of process type are shown in U.S. Patents 3,679,586, 3,718,593, 3,682,825.

In a third production process the particles are produced by crushing or otherwise fracturing a polymer material and then classifying the particles according to size.

In a fourth production process especially suitable for producing liquid toner, polymer particles are wet ground to produce particles. Examples of such processes are found in U.S. Patent 4,794,651.

In a fifth process the polymer is dissolved in a solvent (water or an other solvent) which is then spray dried to produce particles. The particle sizes produced by this process are often too large for toner.

U.S. Patent 4,158,634 describes a sixth process a polymer material is dissolved at an elevated temperature in a solvent which is normally solid (at room temperature). The solution is cooled and solidifies. The now solid solvent is then dissolved in a second, liquid (at room temperature) solvent leaving the polymer. The polymer is brushed through a screen to form a polymer powder.

U.S. Patent 3,586,654 describes a seventh method for producing toner particles in which a polymer is melted in super-heated water (under high pressure) and shear is supplied to form blobs of melted polymer dispersed in the water. The dispersion is cooled to solidify the polymer as round particles and the particles are separated from the water. Since the water and polymer have such disparate viscosities it is difficult to transmit sufficient shear to form the particles. U.S. Patents 3,422,049, 3,449,291, 3,472,801 all describe similar methods of toner particle production.

These processes are either incompatible with the toner requirements, hard to control, expensive or are limited in the range of materials which can be produced.

### SUMMARY OF THE INVENTION

The present invention provides a process for producing spherical particle comprising:
melting together a first said material and a second solid material which are immiscible both said materials being solids at room temperature;
applying shear to the resulting melted mixture of the first and second materials to create an emulsion of the first material and second material whereby finely divided spherical blobs of the first material are dispersed in the second material;
cooling the dispersion to solidify at least the first material; and
removing the second material from the cooled dispersion to yield spherical particles of the first material.

The step of removing preferably comprises dissolving the second material in a solvent in which the first material is not soluble.

Preferably, both the first and second materials are cooled sufficiently to form solids before removing the second material.

Preferably, the first material is a polymer suitable for use in a toner.

In accordance with one preferred embodiment of the invention the second material is a polymer material, in accordance with a second preferred embodiment of the material the second material is a non-polymer material.

The solvent may be water if the second material is water soluble or the solvent may be a hydrocarbon in which the second material is soluble and the first material is insoluble.

Preferably, the two materials have viscosities, at the temperature at which the step of shearing is performed, which enable the transfer of sufficient shear to the first material to cause it to form blobs of the required size.

Suitable toner materials for the process includes polystyrene, Ionomers such as Surlyn 9020 (du Pont) or Iotek 8030 (EXXON) and polyester and co-polyester material such as, for example, Dynapol 1228 marketed by Hulls as well as blends of polymer materials.

The toner material may have a colorant such as carbon black or pigment dispersed therein before the start of the process of manufacturing the spherical particles.

Suitable second materials include the polymers WSR 301 Polyoxyethylene (UNION CARBIDE), hydroxy propyl cellulose marketed by AQUALON under the trade name KLUCEL which are water soluble and vinyl toluene acrylic co-polymer, marketed by Goodyear under the trade name PLIOLITE VTAC and PLIOWAY EC-1, which is a substituted styrene acrylate copolymer marketed by Goodyear all of which are soluble in hexane. INKOVAR 1150 an aliphatic resin produced by Hercules is also useful as a second material. Caramel (cross-linked sugar) can also be used as the second material, and is inexpensive, non-polluting and water soluble.

In a preferred embodiment of the invention the ratio of toner material to other material is between 10:90 and 40:60. More preferably the ratio is between 15:85 and 30:70. For the presently used materials and shearing methods ratios of 15:85 and 20:80 are especially preferred.

The step of shearing can be carried out using any suitable shearing apparatus, consistent with the viscosities of the two melted materials. These may include a simple stirrer for relatively low viscosity materials to an extruder or ball mill for high viscosity materials. In one embodiment of the invention a household mixer is used to apply the shear.

In a preferred embodiment of the invention the melted material is first extruded through an extruder at a relatively low temperature to form relatively long streamers of the first material distributed in the second material. The material which exits the extruder is further heated and passed though a long relatively thin tube. In this tube the long streamers break up into blobs of first material. During the passage of the material through the tube, which preferably takes between 15 and 45 minutes, the blobs of first material become rounded and the first material, which is present in the composite which exits the tube are nearly spherical.

Preferably the composite material is shredded or crushed to speed up the dissolving of the second material.

In a preferred embodiment of the invention, particles which are insoluble in the second material but have either a physical or chemical affinity for the molten first material are added to the heated mixture. When this mixture is further mixed, the particles at least partially coat the molten blobs. On cooling, and removal of the second material the particles of the first material are not smooth, but are coated with the insoluble particles.

The insoluble particles are preferably used to modify the characteristics of the particles. For example, particles of ACCUFLUOR CFX which is a fluorinated carbon marketed by Allied Chemicals can be added to the molten mixture. This additive adheres to the surface of the molten blobs and enhance the chargeability of the resultant particles and provide a surface roughness which enhances the squash resistance of a liquid toner image developed using the particles. Other additive particles could be surfactants to reduce the friction between powder toner particles, pigments which coat the particles or other particles which extend from the surface of the polymer and thereby change the morphology of the particles.

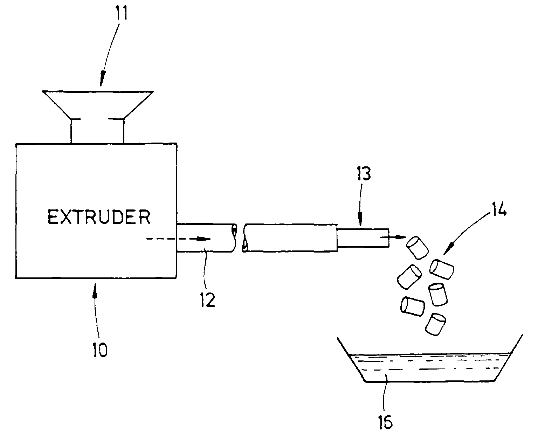

### BRIEF DESCRIPTION OF THE DRAWING

The invention will be more clearly understood in conjunction with the following description of preferred embodiments of the invention taken together with the following drawing in which:

The Fig. is a schematic illustration of an extrusion apparatus useful for producing particles in accordance with a preferred embodiment of the present invention.

### DESCRIPTION OF THE PREFERRED EMBODIMENTS

The present invention comprises the formation of particles of a first material by mixing melted first material with a quantity of a second melted material in which the first material is immiscible.

The melted mixture is emulsified by subjecting it to shear forces which cause the first material to form globules ("blobs") of substantially spherical shape in the second material. In order to provide for good transfer of the shear forces, the two materials should have roughly comparable viscosities at the temperature at which the shear is applied and the first material should preferably have a higher surface tension than the second material. It is believed that a ratio of 2:1 in surface tension is preferable, but that ratios of 5:1 or more are also useful in the performance of the invention.

The emulsion is then cooled to solidify the two materials such that small, preferably spherical, particles of the first material are formed in a matrix of the second material. The solid second material is removed by dissolving the solid mixture in a solvent in which the second, but not the first, material is soluble. At this point the remaining round particles of first material are optionally washed and dried to remove traces of the second material and its solvent.

The size of the particles will depend on the amount of shear force which is applied and, generally speaking, the uniformity of the particles size distribution will depend on the length of time during which the shear forces are applied and to some extent on the method of application. It has been further found that some of the preferred embodiments of the method give excellent narrow distributions of particle size.

Preferably, the particles are substantially spheroidal, however under certain circumstances ellipsoidal or somewhat irregular particles result from the process.

In one preferred embodiment of the method of the invention, the two melted materials are mixed with a wire beater or a single stiff wire which is rotated perpendicular to its axis. This system is preferred for materials which have a relatively low viscosity at the mixing temperature.

A second embodiment of the invention utilizes a two or three roll mill to emulsify the two materials. The materials are melted and fed through the mill a number of times to complete the emulsification. Such method is especially suitable for materials which have a high viscosity at the mixing temperature. The temperature and or the speed of the mill are changed to control the shear rate and hence the particle size.

In a third embodiment of the invention the melted mixture is subjected to ultrasound energy which has the effect of breaking up larger globules of the first material into smaller particles suitable for use as toner. Shear forces are believed to cause the breakup of the particles in this embodiment.

In a fourth, especially preferred, embodiment of the invention the toner and "host" materials are emulsified in the apparatus illustrated schematically in the Fig. In this apparatus an extruder 10 is filled with a mixture of preferably 15-20% toner polymer and 80-85% host material via an entry port 11. The materials are preferably heated in the extruder to a temperature preferably very near their melting points such that the extruded material comprises long, relatively thin, streamers of toner material in the host material. This temperature is not very critical. This extruded mix is then passed through a tube 12 which is preferably from 0.5 to several meters long at a higher temperature than the extrusion process. In a preferred embodiment of the invention, the mix requires between 15 minutes and 1.5 hours to traverse the tube. During this traverse, the streamers break up into substantially round blobs having a narrow range of sizes.

The resulting mix of spherical toner particles in host material solidifies as it leaves the tube (shown schematically at 13) and the cool, solid material is broken into small pieces shown schematically at 14. A solvent 16 is then used to remove the host material. Generally the particles should be washed several times with the solvent to remove all traces of the host material.

In a particular set of experiments 15-20% of pigmented Surlyn 9020 or Iotek 8030 ionomer materials were heated together with PLIOWAY EC-1 material and extruded from the extruder. The mix was passed through a 1.94 cm diameter tube having various lengths of 0.5, 1.0 and 2.0 meters heated to a temperature of about 160°C. The transit time of the material through the tube was of the order of magnitude of one-half to 1 hour. When the exiting material was shredded and the host material was dissolved in hexane substantially round particles of toner material remained.

The size of the particles depends on the amount of shear during the passage of the mix through the tube. This in turn depends on the temperature of the tube, the speed at which the materials traverse the tube and the diameter of the tube. Toner particle in the micrometer range, or even submicrometer range can thus be manufactured using essentially the same process by changing the operating parameters.

In a further experiment for the production of toner particles suitable for liquid toner and especially for powder toner applications, caramel host material is prepared by loading a planetary mixer with 3650 grams of white sugar. The sugar is melted and mixed for a total of 4 hours at a temperature of 176°C to 180°C. The material is discharged when still warm.

Colored toner particle material is prepared by compounding 120 grams of Dynapol S 1228 with 30 grams of BT 583D (blue pigment produced by Cookson) in a Brabender Two-Roll Mill heated to 100°C by an oil heating unit. The materials are compounded for about 20 minutes at 65 RPM with a torque of about 45 Nm. The material is discharged while still warm and is shredded after cooling.

The toner particles are produced by the following steps:
1- 60 g of caramel material and 40 grams of colored shredded toner material are loaded into a small wire mixer heated to about 100°C. The material is mixed for about 20 minutes.
2- The caramel is dissolved by the addition of warm water to the mixture. The remaining toner particles are washed with additional water to remove all traces of the caramel. The water is removed by washing the toner particles with Isopropanol.
3- The Isopropanol is removed by washing the particles with the carrier liquid (Isopar, Peneteck, Marcol, etc.) which is to be used as the carrier liquid in the liquid toner. The solvent replacement is performed by centrifugation and decantation of supernatant followed by redispersion in fresh solvent.

The resulting particles as measured in Shimadzu particle size analyzer have an average size of 8.67 micrometers.

In a preferred embodiment of the invention, particles which are insoluble in the host material but, preferably, have either a physical or chemical affinity for the molten first material, are added to the heated mixture. When the mixture is further mixed, the particles at least partially coat the molten blobs. On cooling and removal of the second material the particles of the first material are not smooth, but are coated with the insoluble particles.

The insoluble particles are preferably used to modify the characteristics of the particles. For example, ACCUFLUOR CFX powder which is a fluorinated carbon marketed by Allied Chemicals can be added to the molten mixture. The powder adheres to the surface of the molten blobs and enhances the chargeability of the resultant particles and provides surface roughness which enhances the squash resistance of a liquid toner image developed using the particles. Other additive particles could be surfactants to reduce the friction between powder toner particles, pigments which coat the particles or other particles which extend from the surface of the polymer and thereby change the morphology of the particles, such as carbon black or carbonate materials.

In a further series of examples, colorant is dispersed in the toner material before the toner material is mixed with the first material.

In one example toner material is prepared by dispersing 56 parts of DYNACOL 8130 and 14 parts of DYNACOL 8150 (copolyesters produced by Hulls) with 10 parts of DESMUCOL 420 (hydroxyl polyurethane produced by Bayer) and 20 parts of BT 5830 (blue pigment produced by Cookson) in a two roll mill heated to 90°C until the material is well dispersed. 200 grams of this toner material is loaded into a metal pot provided with an external metal heater together with 570 grams of INKOVAR 1150 (an aliphatic resin produced by Hercules), 30 grams of Marcol M-80 (EXXON) and Lubrizol-890 (Lubrizol). The Marcol and Lubrizol are added to reduce the viscosity of the mixture and to improve the separation of the toner and INKOVAR.

The material in the pot is heated to a temperature of about 135°C and is mixed in a Kenwood model KM202 electronic mixer. The material is mixed at a slow speed for 5 minutes, at speed 3 for 5 minutes and finally for 5 additional minutes at speed 5 (high speed).

The material is discharged from the pot while still warm and is allowed to cool to room temperature. The material is crushed to small particles and the INKOVAR is removed by repeated washing with Isopar-L, using a mechanical mixer and centrifuge to remove the spheres from the solution of INKOVAR in Isopar. Carrier liquid as desired and charge director are added to for a liquid toner. The particle size as measured by a Shimadzu particle size analyzer is 3.51 micrometers (median).

In a second example of this type, a 25% solids dispersion of tentacular particles comprising 80% Surlyn 165L and 20% Mogul-L carbon black in Isopar-L is added to a mixture of PLIOWAY EC-1 (600 grams) and Marcol-82 (100 grams) preheated to 130°C. The mixture is mixed in the Kenwood mixer at low speed and the temperature is reduced to about 100°C. Mixing is continued at low speed for 70 minutes. The resulting material is discharged warm and allowed to cool. The material is crushed and the PLIOWAY is removed by repeated washing with toluene and centrifugation. The toner is washed repeatedly with Isopar-L to remove traces of Toluene. The particle size as measured by a Shimadzu particle size analyzer is 3.01 micrometers (median). It should be noted that the starting toner material is in the form of tentacular toner particles having a size in the 1-2 micrometer range. Methods of producing such toner are well known in the art. Such material was used for convenience only. The starting toner material may be prepared by dispersion of the carbon black in the Surlyn material by a two-roll mill or by any convenient method and pulverizing the resultant product. The Isopar-L has the added effect of solvating the Surlyn at temperatures above room temperature and thus reducing the temperature of the process, since unsolvated Surlyn melts at very high temperatures.

A wide variety of materials are useful in the present invention, for example, those materials listed in the summary of invention. In each case one material is chosen for its properties as a toner and the other, host, material is chosen based on its incompatibility with the first material, its melting point and viscosity relative to the first material and cost and pollution factors.

## Claims

1. A method for producing spherical particles comprist.
melting together a first solid material and a second solid material which are immiscible, both said materials being solids at room temperature;
applying shear to the resulting melted mixture of the first material and the second material to create an emulsion of the first material and second material in which finely divided spherical blobs of the first material are dispersed in the second material;
cooling the dispersion to solidify at least the first material; and
removing the second material from the cooled dispersion to yield spherical particles of the first material.

2. A method according to claim 1 wherein the step of removing comprises the step of dissolving the second material in a solvent in which the first material is not soluble.

3. A method according to claim 1 or claim 2 wherein the step of cooling includes cooling both the first and second materials sufficiently to form solids before removing the second material.

4. A method according to any of the preceding claims wherein the second material is a polymer material.

5. A method according to any of the previous claims wherein the second material is a caramel.

6. A method according to any of the previous claims wherein the first material comprises a thermoplastic polymer suitable for use in a toner.

7. A method according to any of the previous claims wherein the second material is water soluble and the solvent is water.

8. A method according to any of the previous claims wherein the first and second materials have viscosities, at the temperature at which the step of shearing is performed, which enable the transfer of sufficient shear to the first material to cause it to form blobs of the required size.

9. A method according to any of the previous claims wherein the two materials have a ratio of viscosities at the temperature of the shearing step which is less than 5:1.

10. A method according to claim 9 wherein the ratio is less than 2:1.

11. A method according to any of the previous claims and including the step of adding a powdered insoluble material into the melted emulsion before the step of shearing is completed, whereby the powder adheres to the blobs and thereby coats the resulting particles.

12. A method according to any of the previous claims wherein the first material is a pigmented polymer.

## Patentansprüche

1. Verfahren zur Herstellung von kugelförmigen Partikeln, umfassend
Zusammenschmelzen eines ersten Festkörpermaterials und eines zweiten Festkörpermaterials, die nicht mischbar sind, wobei die beiden Materialien bei Raumtemperatur Feststoffe sind;
Aufbringen einer Scherbeanspruchung auf die resultierende geschmolzene Mischung des ersten Materials und des zweiten Materials, um eine Emulsion des ersten Materials und zweiten Materials zu erzeugen, in der fein verteilte kugelförmige Blobs des ersten Materials im zweiten Material dispergiert sind;
Abkühlen der Dispersion, um mindestens das erste Material zu verfestigten; und
Entfernen des zweiten Materials aus der abgekühlten Dispersion, um kugelförmige Partikeln des ersten Materials zu liefern.

2. Verfahren nach Anspruch 1, bei dem der Schritt eines Entfernens den Schritt eines Lösens des zweiten Materials in einem Lösungsmittel umfasst, in dem das erste Material nicht lösbar ist.

3. Verfahren nach Anspruch 1 oder Anspruch 2, bei dem der Schritt eines Abkühlens umfasst: ausreichendes Abkühlen sowohl des ersten als auch zweiten Materials, um Feststoffe zu bilden, bevor das zweite Material entfernt wird.

4. Verfahren nach einem der vorangehenden Ansprüche, bei dem das zweite Material ein Polymermaterial ist.

5. Verfahren nach einem der vorangehenden Ansprüche, bei dem das zweite Material ein Karamel ist.

6. Verfahren nach einem der vorangehenden Ansprüche, bei dem das erste Material ein thermoplastisches Polymer umfasst, das zur Verwendung in einem Toner geeignet ist.

7. Verfahren nach einem der vorangehenden Ansprüche, bei dem das zweite Material wasserlöslich ist und das Lösungsmittel Wasser ist.

8. Verfahren nach einem der vorangehenden Ansprüche, bei dem das erste und zweite Material bei der Temperatur, bei welcher der Schritt einer Scherbeanspruchung durchgeführt wird, Viskositäten aufweisen, welche die Übertragung einer ausreichenden Scherbeanspruchung auf das erste Material ermöglichen, um zu bewirken, dass es Blobs von der erforderlichen Größe bildet.

9. Verfahren nach einem der vorangehenden Ansprüche, bei dem die zwei Materialien bei der Temperatur des Scherbeanspruchungsschritts ein Viskositätenverhältnis aufweisen, das kleiner als 5:1 ist.

10. Verfahren nach Anspruch 9, bei dem das Verhältnis kleiner als 2:1 ist.

11. Verfahren nach einem der vorangehenden Ansprüche und umfassend den Schritt eines Hinzufügens eines unlöslichen Pulvermaterials in die geschmolzene Emulsion, bevor der Schritt einer Scherbeanspruchung abgeschlossen ist, wodurch das Pulver an den Blobs anhaftet und dadurch die resultierenden Partikeln überzieht.

12. Verfahren nach einem der vorangehenden Ansprüche, bei dem das erste Material ein pigmentiertes Polymer ist.

## Revendications

1. Procédé de fabrication de particules sphériques comprenant les étapes consistant à :
faire fondre ensemble un premier matériau solide et un second matériau solide qui ne sont pas miscibles, ces deux matériaux étant solides à la température ambiante;
appliquer un cisaillement au mélange fondu obtenu à partir du premier matériau et du second matériau afin de créer une émulsion du premier matériau et du second matériau dans laquelle le premier matériau est dispersé sous forme de fines gouttelettes sphériques dans le second matériau;
faire refroidir la dispersion pour solidifier au moins le premier matériau; et
retirer le second matériau de la dispersion refroidie pour obtenir des particules sphériques du premier matériau.

2. Procédé selon la revendication 1, dans lequel l'étape de retrait comprend une étape consistant à dissoudre le second matériau dans un solvant dans lequel le premier matériau n'est pas soluble.

3. Procédé selon la revendication 1 ou 2, dans lequel l'étape de refroidissement comprend le fait de faire refroidir à la fois le premier et le second matériaux suffisamment pour les solidifier avant de retirer le second matériau.

4. Procédé selon l'une quelconque des revendications précédentes, dans lequel le second matériau est un polymère.

5. Procédé selon l'une quelconque des revendications précédentes, dans lequel le second matériau est un caramel.

6. Procédé selon l'une quelconque des revendications précédentes, dans lequel le premier matériau comprend un polymère thermoplastique approprié pour être employé dans un toner.

7. Procédé selon l'une quelconque des revendications précédentes, dans lequel le second matériau est soluble dans l'eau et le solvant est de l'eau.

8. Procédé selon l'une quelconque des revendications précédentes, dans lequel le premier et le second matériaux ont, à la température à laquelle est exécutée l'étape de cisaillement, des viscosités qui permettent le transfert au premier matériau d'un cisaillement suffisant pour qu'il forme des gouttelettes de la taille requise.

9. Procédé selon l'une quelconque des revendications précédentes, dans lequel le rapport des viscosités des deux matériaux, à la température de l'étape de cisaillement, est inférieur à 5:1.

10. Procédé selon la revendication 9, dans lequel ledit rapport est inférieur à 2:1.

11. Procédé selon l'une quelconque des revendications précédentes, qui comporte une étape consistant à ajouter dans l'émulsion en fusion, avant que l'étape de cisaillement ne soit terminée, un matériau insoluble en poudre qui adhère aux gouttelettes et forme ainsi un revêtement sur les particules finalement obtenues.

12. Procédé selon l'une quelconque des revendications précédentes, dans lequel le premier matériau est un polymère teinté.
